# FASCICULE DE BREVET EUROPEEN

(11) **EP 1 457 390 B1**
(45) Date de publication et mention de la délivrance du brevet: **19.12.2012**
(21) Numéro de dépôt: 04290548.9
(22) Date de dépôt: 01.03.2004
(51) Int. Cl.: B60R 19/48

(54) **Support de capteur d'un véhicule automobile**
Sensorbefestigungsträger eines Kraftfahrzeuges
Sensor support of a motor vehicle

(30) Priorité: 04.03.2003 FR 0302632
(43) Date de publication de la demande: 15.09.2004
(73) Titulaire: COMPAGNIE PLASTIC OMNIUM, 69007 Lyon (FR)
(72) Inventeur: Demange, Jean-Yves, 01500 Amerieu en Bugey (FR); Montanvert, Pierre, 69100 Villeurbanne (FR); Ollier, Fabrice, 01700 Miribel (FR)
(74) Mandataire: Remy, Vincent Noel Paul

(56) Documents cités:
- DE-A- 19 530 262
- DE-C- 10 128 967
- FR-A- 2 809 691
- US-A- 2 130 548
- US-A1- 2003 000 753
- US-B1- 6 315 338

## Description

### 1) Domaine technique auquel se rapporte l'invention

L'invention concerne la fabrication de pièces extérieures de véhicules automobiles et la fixation de capteurs de diverses natures sur ces pièces extérieures.

En particulier, l'invention se rapporte à la fixation de capteurs de détection à l'avant ou à l'arrière d'un véhicule automobile.

### 2) Etat de la technique antérieur connu

Le document EP 1 005 692 divulgue un agencement de fixation d'un capteur à une peau de pare-chocs.

Dans un tel dispositif, un support de capteurs coopère avec des formes spécifiques prévues sur la peau de pare-chocs, laquelle comporte en outre une ouverture de dégagement ouvrant un champ de vision pour le capteur.

Un inconvénient de ce dispositif connu est que la peau de pare-chocs doit être réalisée spécifiquement pour pouvoir recevoir le capteur. En d'autres termes, il est nécessaire de réaliser à la fois des peaux de pare-chocs qui ne sont pas destinées à recevoir des capteurs et des peaux de pare-chocs qui sont destinées à recevoir des capteurs, ce qui complique la gestion et le stockage des peaux de pare-chocs.

En outre, sur un véhicule déjà construit, l'ajout d'un capteur nécessite le remplacement de la peau de pare-chocs.

### 3) Exposé de l'invention

L'invention vise à résoudre le problème exposé ci-dessus, en fournissant un ensemble de fixation selon la revendication 1 avec un support de capteur d'un véhicule automobile, susceptible d'être fixé sur n'importe quelle peau de pare-chocs. A cet effet, l'invention a pour objet un support de capteur d'un véhicule automobile, comportant une base de montage portant des moyens de réception d'un capteur, caractérisé en ce que la base de montage est conformée pour être assujettie à deux portions d'un barreau d'une grille, situées dans l'alignement l'une de l'autre mais espacées pour laisser la place à un capteur.

Non seulement la grille recevant le support n'a pas à être configurée spécifiquement lors de sa fabrication, mais en outre, sur un véhicule déjà construit, l'ajout d'un capteur ne pose aucune difficulté. Il suffit en effet de découper l'un des barreaux d'une grille déjà présente sur le véhicule pour en retirer une portion centrale et de fixer le support selon l'invention sur les deux portions alignées du barreau situées de part et d'autre de la portion centrale retirée.

De plus, une grille munie d'un support de capteurs peut être esthétiquement modifiée par l'ajout d'un enjoliveur soulignant la présence du capteur.

La fixation du support de capteur sur la grille consiste par exemple à prendre en sandwich des deux portions alignées du barreau, entre une armature et un enjoliveur constituant la base de montage du support.

Grâce à ce mode de fixation, le barreau découpé retrouve une bonne rigidité lors du montage final.

Un support de capteur d'un véhicule automobile selon l'invention peut en outre comporter l'une ou plusieurs des caractéristiques suivantes :
- la base de montage comprend une armature, et un enjoliveur couvrant ladite armature ;
- l'armature et l'enjoliveur sont agencés pour prendre en sandwich les deux portions alignées du barreau ;
- l'enjoliveur comporte des moyens de maintien des deux portions alignées du barreau entre l'enjoliveur et l'armature ;
- les moyens de maintien comprennent une première partie fixe appartenant à l'enjoliveur et une seconde partie rabattable appartenant également à l'enjoliveur, les première et seconde parties étant aptes à se rejoindre pour se solidariser par encliquetage, en ceinturant les deux portions du barreau et l'armature ;
- les moyens de maintien comprennent deux premières parties appartenant à l'enjoliveur et deux secondes parties appartenant à l'armature, les première et seconde parties étant aptes à se rejoindre pour se solidariser par encliquetage, en enfermant les deux portions du barreau entre l'enjoliveur et l'armature ;
- les moyens de maintien comprennent des éléments en saillie appartenant à l'enjoliveur et des orifices appartenant à l'armature, l'enjoliveur et l'armature étant agencés pour prendre les portions de barreau en sandwich tandis que les éléments en saillie traversent et dépassent des orifices, dans lesquels ils peuvent ensuite être maintenus par rivetage ou bouterollage.

### 4) Brève description des dessins

- la figure 1 est une vue de face d'une grille d'entrée d'air ;
- la figure 2 est une vue analogue à la figure 1 après découpe d'un barreau ;
- la figure 3 est une vue analogue à la figure 2 après positionnement d'un support de capteur ;
- la figure 4 est une vue en coupe selon IV-IV de la figure 3 ;
- la figure 5 est une vue en coupe selon V-V de la figure 3 ;
- la figure 6 est une vue analogue à la figure 5 d'une variante de la réalisation ;
- la figure 7 est une vue analogue à la figure 5 d'une autre variante de la réalisation ;
- la figure 8 est une vue en perspective d'une portion d'une autre grille, vue de face ;
- la figure 9 est une vue en perspective de la grille de la figure 8, vue de dos, après découpe d'un de ses barreaux ;
- la figure 10 est une vue analogue à la figure 8, après mise en place, par l'arrière, de l'armature d'un support de capteur et du capteur, dans l'espace laissé libre par la découpe ;
- la figure 11 est une vue analogue à la figure 10 après mise en place, par l'avant, de l'enjoliveur ;
- la figure 12 est une vue analogue à la figure 9 après mise en place du support de capteur et du capteur ;
- la figure 13 est une vue analogue à la figure 12, le capteur étant retiré.

### 5) Exposé détaillé d'au moins un mode de réalisation

Une grille, fixée dans une ouverture d'entrée d'air d'une peau de pare-chocs 1, comprend notamment deux barreaux 2, 3 reliés entre eux et reliés à la peau par des montants transversaux 4, qui sont verticaux lorsque la grille est positionnée avec ses barreaux 2, 3 horizontaux sur le véhicule.

Le bord supérieur de l'ouverture comprend un aménagement 5 en partie centrale, définissant une fente horizontale 6.

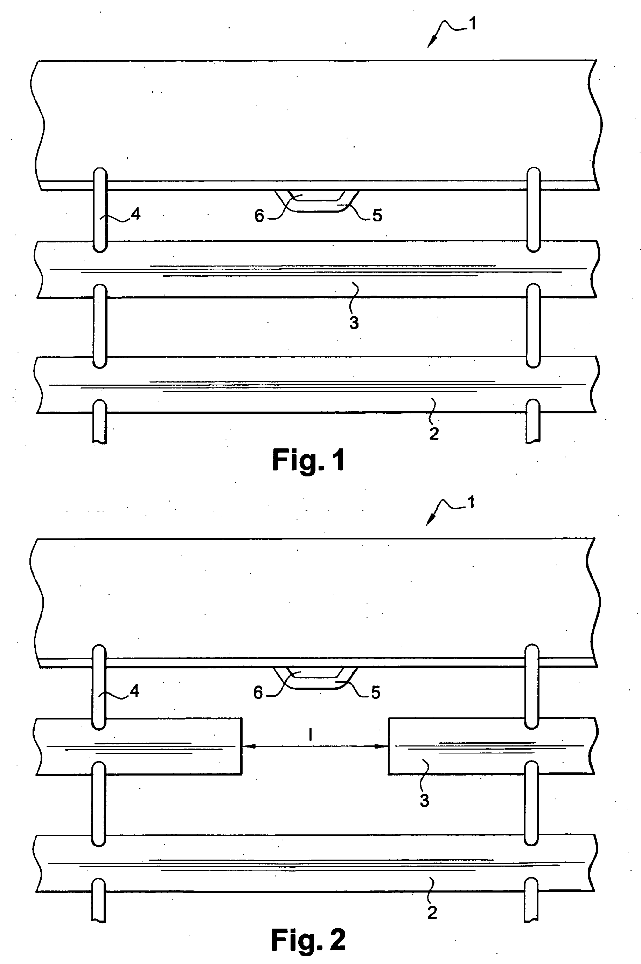

En vue de la fixation d'un capteur, on découpe le barreau supérieur 3 comme indiqué en figure 2 pour dégager un espace de longueur "ℓ" laissant la place à un capteur logé dans une douille support.

Le barreau 3 est fragilisé par cette découpe mais son renfort sera assuré par le support de capteur, comme cela va être décrit.

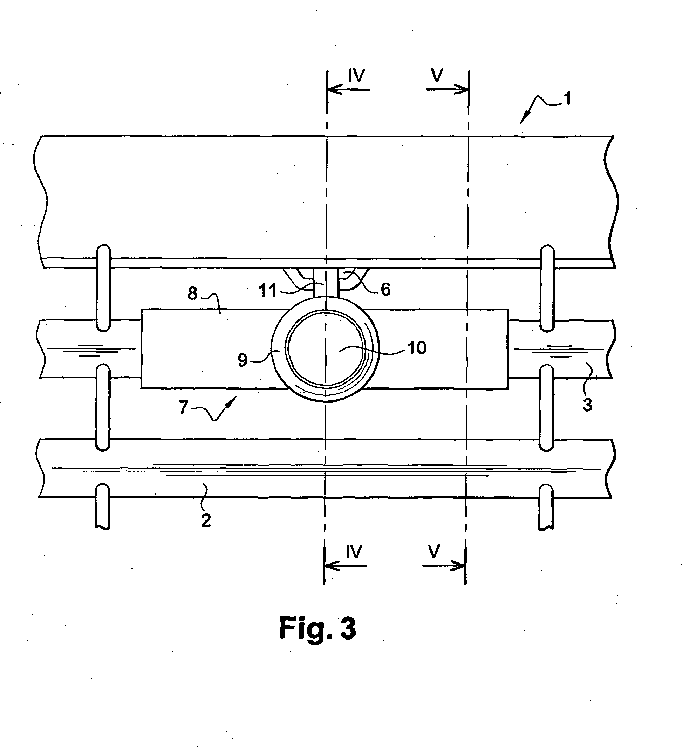

Sur la figure 3, on voit le support de capteur 7 positionné sur le barreau 3 découpé.

Le support de capteur 7 comprend une base de montage 8 et une douille support 9 recevant le capteur 10. La douille support 9 a une forme sensiblement cylindrique qui ne sera pas détaillée ici.

La base de montage 8 est constituée de deux ailes situées dans l'alignement l'une de l'autre et conformées pour pouvoir s'appliquer chacune sur une des deux portions alignées du barreau 3, en épousant sa forme extérieure.

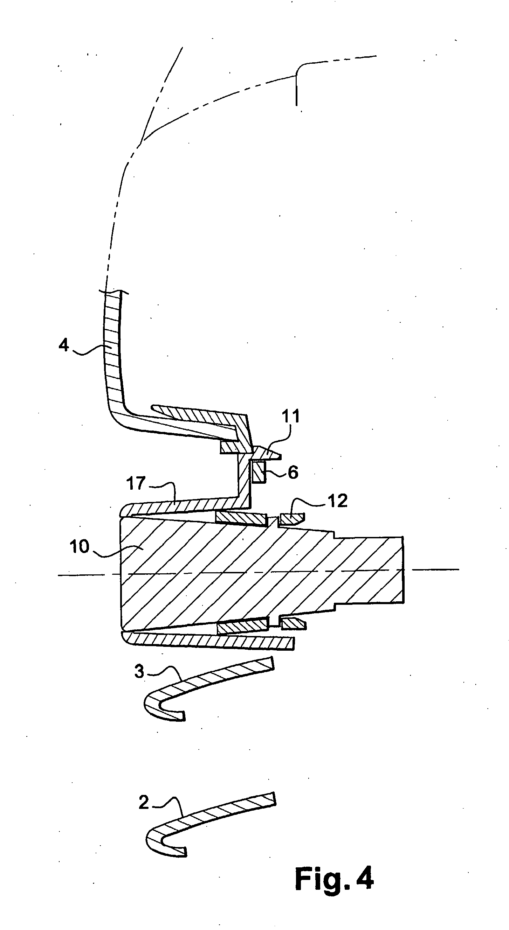

La douille support 9 comporte en outre une patte 11 qui vient s'encliqueter dans la fente 6,comme on le voit mieux sur la figure 4.

Le support de capteur est globalement constitué de deux pièces, à savoir d'une part, une pièce en matière plastique définissant la partie visible 17 de la douille support 9 et la partie visible 18 de la base de montage 8 et, d'autre part, une armature non métallique (mais qui pourrait aussi être métallique dans un autre exemple de réalisation), comprenant aussi une partie formant douille-support 12 et deux parties formant ailes 13.

Dans la suite, on s'intéresse à la partie 18 de l'enjoliveur et à la partie 13 de l'armature, que l'on désigne respectivement enjoliveur 18 et armature 13.

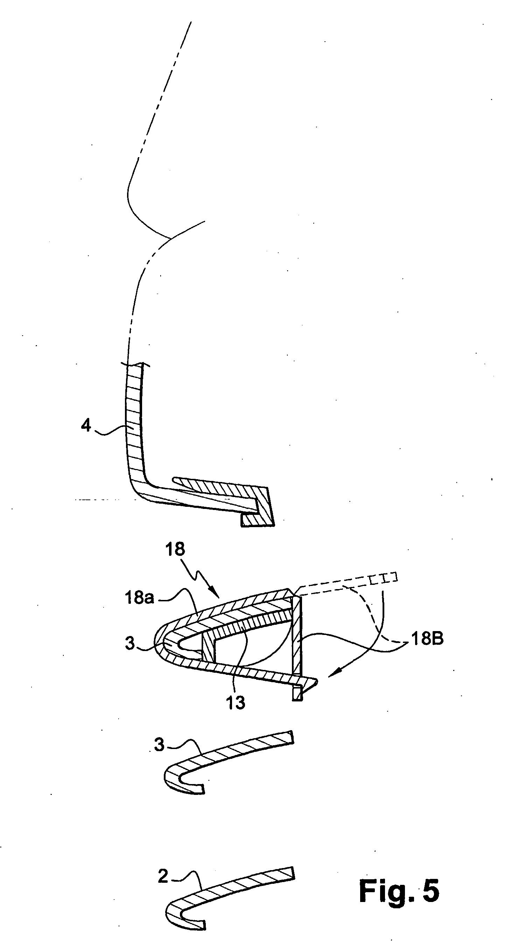

Comme on le voit sur la figure 5, l'enjoliveur 18 enrobe la portion de barreau 3 en épousant sa forme extérieure. De plus, il comprend une première partie fixe 18a et une seconde partie rabattable 18b dont les extrémités assurent la prise en sandwich du barreau 3 entre l'armature 13 et l'enjoliveur 18, qui ceinture ainsi le tout.

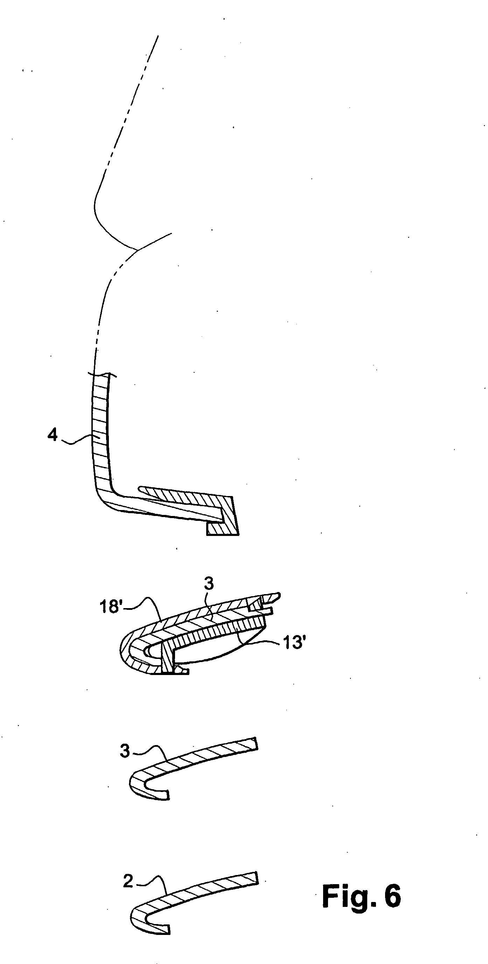

Dans une variante, qui est représentée à la figure 6, l'enjoliveur 18' ne couvre que la face externe de la portion de barreau 3, mais il comporte, à chacune de ses extrémités, des moyens d'encliquetage avec les extrémités coopérantes de l'armature 13', de sorte que la portion du barreau 3 est également maintenue en sandwich entre l'enjoliveur et l'armature.

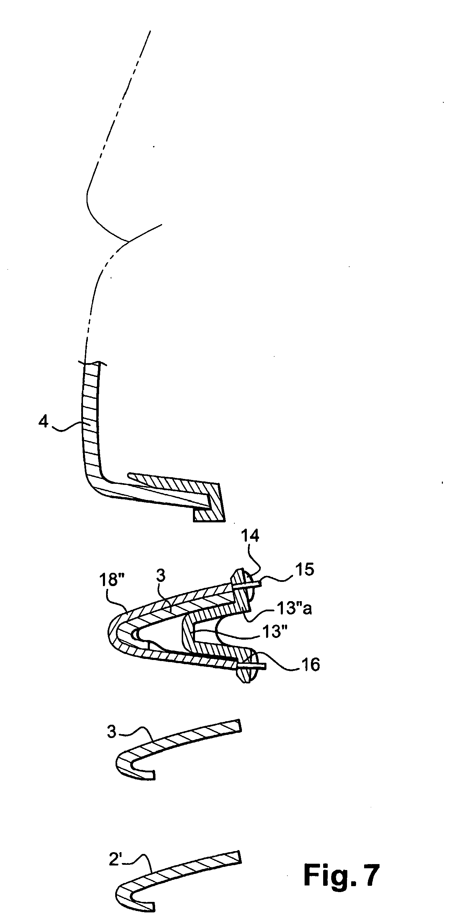

Dans une deuxième variante, représentée à la figure 7, l'enjoliveur 18" présente une section en U qui enferme la portion de barreau 3, tandis que l'armature 13" présente également une section en U terminée par une embase 13"a apte à se solidariser à l'enjoliveur 18" par des rivets 14 montés sur des éléments 15 en saillie de l'enjoliveur, traversant des orifices 16 ménagés dans ladite embase.

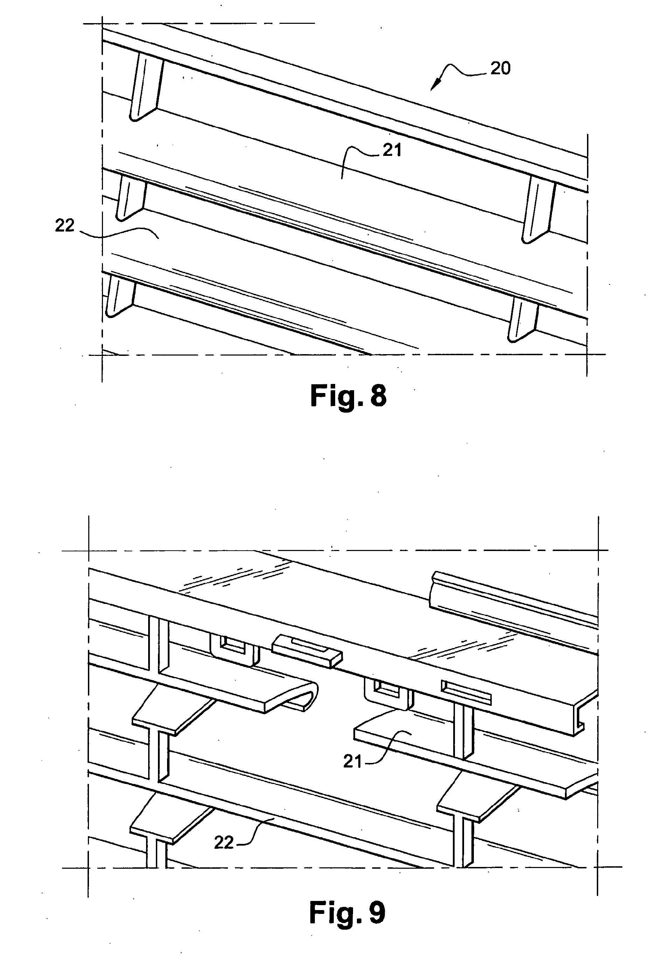

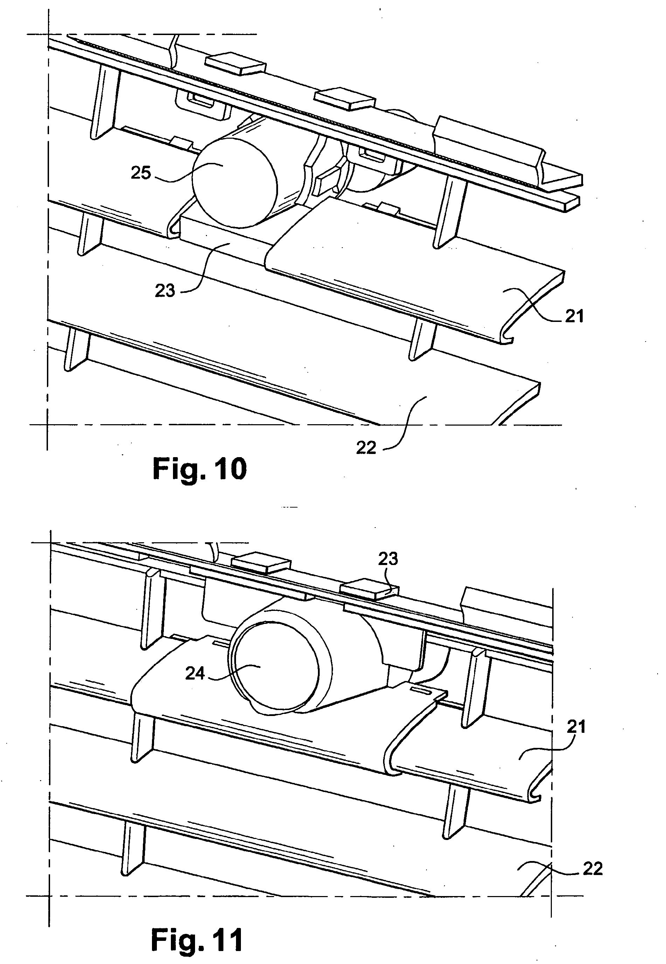

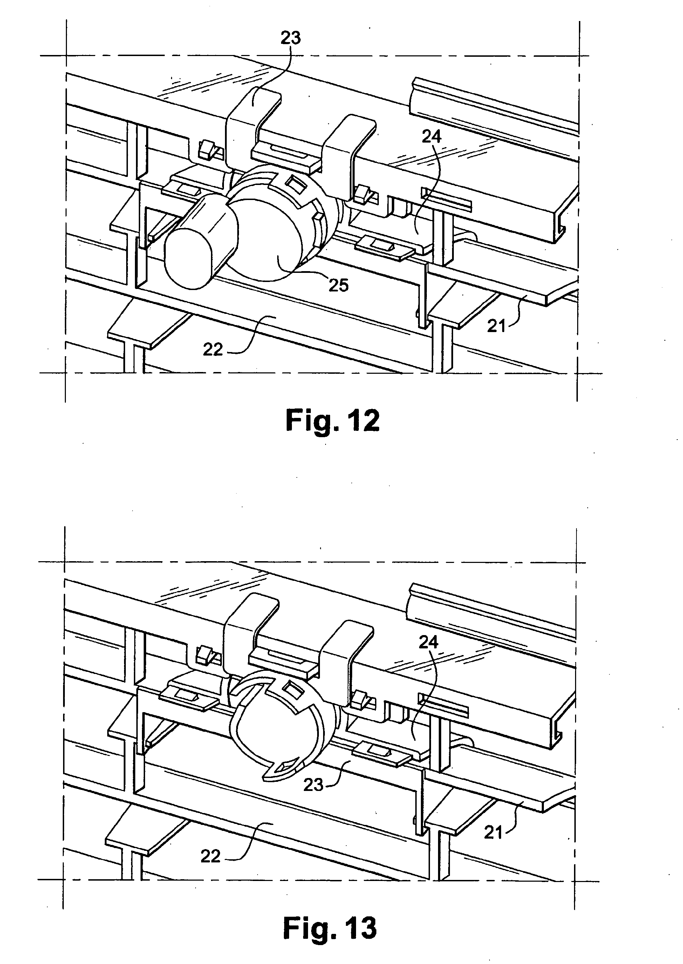

Dans l'exemple des figures 8 à 13, on retrouve une grille 20 ayant des barreaux 21, 22. Le barreau 21 subit une découpe en partie centrale puis une armature 23 est positionnée par l'arrière sur les deux portions restantes du barreau 21.

Un enjoliveur 24 est ensuite positionné par l'avant sur les deux portions de barreau, qu'il prend en sandwich avec l'armature, avec laquelle il s'encliquète.

Un capteur 25 prend place dans le support ainsi constitué.

Ces exemples de réalisation ne sont fournis qu'à titre d'exemples et ne présentent aucun caractère limitatif de la portée de l'invention.

## Revendications

1. Ensemble de fixation d'un capteur de détection sur un véhicule automobile, **caractérisé en ce qu'**il comporte une grille comprenant au moins un barreau, et un support comportant une base de montage (8) portant des moyens (9) de réception d'un capteur (10) de détection qui comprennent une douille support, la base de montage étant
conformée pour être assujettie à deux portions d'un barreau (3, 21) d'une grille, situées dans l'alignement l'une de l'autre selon la direction longitudinal du barreau mais espacées pour laisser la place à un capter de sorte que les moyens (9) de réception sont placés dans l'espace entre les deux portions de barreau.

2. Ensemble selon la revendication 1, dans lequel la base de montage (8) comprend une armature (13, 23) et un enjoliveur (18, 24) couvrant ladite armature.

3. Ensemble selon la revendication 2, dans lequel l'armature (13, 23) et l'enjoliveur (18, 24) sont agencés pour prendre en sandwich les deux portions alignées du barreau.

4. Ensemble selon la revendication 3, dans lequel l'enjoliveur (18, 24) comporte des moyens de maintien des deux portions alignées du barreau entre l'enjoliveur et l'armature.

5. Ensemble selon la revendication 4, dans lequel les moyens de maintien comprennent une première partie fixe (18a) appartenant à l'enjoliveur et une seconde partie rabattable (18b) appartenant également à l'enjoliveur, les première et seconde parties étant aptes à se rejoindre pour se solidariser par encliquetage, en ceinturant les deux portions du barreau et l'armature (13).

6. Ensemble selon la revendication 4, dans lequel les moyens de maintien comprennent deux premières parties appartenant à l'enjoliveur (18') et deux secondes parties appartenant à l'armature (13'), les première et seconde parties étant aptes à se rejoindre pour se solidariser par encliquetage, en enfermant les deux portions du barreau entre l'enjoliveur et l'armature.

7. Ensemble selon la revendication 4, dans lequel les moyens de maintien comprennent des éléments (15) en saillie appartenant à l'enjoliveur (18") et des orifices (16) appartenant à l'armature (13"), l'enjoliveur et l'armature étant agencés pour prendre les portions de barreau en sandwich tandis que les éléments en saillie traversent et dépassent des orifices, dans lesquels ils peuvent ensuite être maintenus par rivetage ou bouterollage.

8. Procédé de fixation d'un capteur sur un véhicule automobile comprenant une grille munie d'au moins un barreau, **caractérisé en ce que** :
- on découpe le barreau de façon à dégager un espace entre deux portions du barreau, laissant la place à un capteur,
- on assujettit la base de montage du support de capteur aux deux portions du barreau (3, 21).

9. Dispositif comprenant un ensemble de fixation selon l'une quelconque des revendications 1 à 7 et un capteur de détection.

## Claims

1. Assembly for fixing a detection sensor to a motor vehicle, **characterized in that** it comprises a grille including at last one bar, and a support comprising an assembly base (8) which carries means (9) for receiving a detection sensor (10) which comprises a support bushing, the assembly base being shaped so as to be secured to two portions (3, 21) of a bar in a grille, said portions being aligned with each other along the longitudinal direction of the bar but being spaced apart so as to leave room for a sensor, in such a way that the means (9) for receiving are placed in the space between the two portions of the bar.

2. Assembly according to claim 1, in which the assembly base (8) comprises a strength member (13, 23) and a piece of trim (18, 24) covering said strength member.

3. Assembly according to claim 2, in which the strength member (13, 23) and the piece of trim (18, 24) are arranged to sandwich between them the two aligned portions of the bar.

4. Assembly according to claim 3, in which the piece of trim (18, 24) includes a holder for holding the two aligned portions of bar between the piece of trim and the strength member.

5. Assembly according to claim 4, in which the holder comprises a fixed first portion (18a) of the piece of trim and a flap second portion (18b) also belonging to the piece of trim, the first and second portions being suitable for uniting so as to become mutually engaged by snap-fastening, thereby extending around the two bar portions and the strength member (13).

6. Assembly according to claim 4, in which the holder comprise two first portions belonging to the piece of trim (18') and two second portions belonging to the strength member (13'), the first and second portions being suitable for uniting to be held together by snap-fastening, enclosing between the two bar portions between the piece of trim and the strength member.

7. Assembly according to claim 4, in which the holder comprising projecting elements (15) belonging to the piece of trim (18") and orifices (16) belonging the strength member (13"), the piece of trim and the strength member being arranged to sandwich between them the portions of bar while the projecting elements pass through and project beyond the orifices in which they can subsequently be held riveting or flattening.

8. Method for fixing a sensor to a motor vehicle comprising a grille having a least one bar, **characterized in that**:
- The bar is cut so as to open up a space between two portions of the bar, leaving room for a sensor,
- the assembly base of the sensor support is secured to the two portions (3,21) of the bar.

9. Device comprising a fixing assembly according to any of claims 1 to 7 and a detection sensor.

## Patentansprüche

1. Baugruppe zum Befestigen eines Erfassungssensors an einem Kraftfahrzeug, **dadurch gekennzeichnet, dass** sie ein Gitter umfassend mindestens eine Stange und einen Träger aufweist, der eine Montagebasis (8) umfasst, die Mittel (9) zum Aufnehmen eines Erfassungssensors (10) trägt, die eine Traghülse aufweisen, wobei die Montagebasis ausgebildet ist, um mit zwei Abschnitten einer Stange (3, 21) eines Gitters verbunden zu werden, die sich in der Fluchtung zueinander entlang der Längsrichtung der Stange befinden, aber beabstandet sind, um Platz für einen Sensor zu lassen, so dass die Aufnahmemittel (9) in dem Raum zwischen den zwei Stangenabschnitten platziert sind.

2. Baugruppe nach Anspruch 1, bei der die Montagebasis (8) eine Bewehrung (13, 23) und ein Zierelement (18, 24), das die Bewehrung abdeckt, aufweist.

3. Baugruppe nach Anspruch 2, bei der die Bewehrung (13, 23) und das Zierelement (18, 24) derart eingerichtet sind, dass sie die zwei ausgerichteten Abschnitte der Stange in Sandwich nehmen.

4. Baugruppe nach Anspruch 3, bei der das Zierelement (18, 24) Mittel zum Halten der zwei sich in der Fluchtung zueinander befindlichen Abschnitte der Stange zwischen dem Zierelement und der Bewehrung aufweist.

5. Baugruppe nach Anspruch 4, bei der die Haltemittel einen ersten stationären Teil (18a, der zu dem Zierelement gehört, und einen zweiten herunterklappbaren Teil (18b), der ebenfalls zu dem Zierelement gehört, aufweisen, wobei der erste und der zweite Teil geeignet sind, um aufeinander zu treffen, um sich durch Einrasten fest miteinander zu verbinden, indem sie die zwei Abschnitte der Stange und die Bewehrung (13) umgeben.

6. Baugruppe nach Anspruch 4, bei der die Haltemittel zwei erste Teile, die zu dem Zierelement (18') gehören, und zwei zweite Teile, die zu der Bewehrung (13') gehören, aufweisen, wobei der erste und der zweite Teil geeignet sind, um aufeinander zu treffen, um sich durch Einrasten fest miteinander zu verbinden, indem sie die zwei Abschnitte der Stange zwischen dem Zierelement und der Bewehrung einschließen.

7. Baugruppe nach Anspruch 4, bei der die Haltemittel vorstehende Elemente (15), die zu dem Zierelement (18") gehören, und Öffnungen (16), die zu der Bewehrung (13") gehören, aufweisen, wobei das Zierelement und die Bewehrung eingerichtet sind, um die Stangenabschnitte in Sandwich zu nehmen, während die vorstehenden Elemente die Öffnungen durchqueren und aus ihnen vorstehen, in welchen sie danach durch Vernieten oder Verschellen gehalten werden können.

8. Befestigungsverfahren eines Sensors an einem Kraftfahrzeug aufweisend ein Gitter, das mit mindestens einer Stange versehen ist, **dadurch gekennzeichnet, dass**:
- man die Stange derart schneidet, dass ein Raum zwischen zwei Abschnitten der Stange freigelegt wird, der Platz für einen Sensor lässt,
- man die Montagebasis des Sensorträgers mit den zwei Stangen (3, 21) verbindet.

9. Vorrichtung, die eine Baugruppe zum Befestigen nach einem der Ansprüche 1 bis 7 und einen Erfassungssensor aufweist.
